# EUROPEAN PATENT SPECIFICATION

(11) **EP 1 591 545 B1**
(45) Date of publication and mention of the grant of the patent: **15.10.2008**
(21) Application number: 04425859.8
(22) Date of filing: 18.11.2004
(51) Int. Cl.: C22B 7/00, C22B 34/32, C23G 1/08, C23F 1/16, C23F 1/44

(54) **Eco-friendly stripping of chromium-plated plastic materials and extension to Cr-plated passivatable metallic substrates**
Umweltfreundliche Schichtentfernung von verchromten Kunststoffgegenständen und Erweiterung zu Cr-beschichteten passivierbaren Metallsubstraten
Démétallisation écocompatible de matériaux plastiques chromés et extension aux substrats métalliques passivables revêtus de Cr.

(30) Priority: 27.04.2004 IT pd20040106
(43) Date of publication of application: 02.11.2005
(73) Proprietor: Farnia, Giuseppe, 35030 Selvazzano Dentro (Padova) (IT); Boye, Birame, 35131 Padova (IT); Sandona, Giancarlo, 35129 Padova (IT); Meneghetti, Moreno, 35133 Padova (IT)
(72) Inventor: Farnia, Giuseppe, 35030 Selvazzano Dentro (Padova) (IT); Boye, Birame, 35131 Padova (IT); Sandona, Giancarlo, 35129 Padova (IT); Meneghetti, Moreno, 35133 Padova (IT)

(56) References cited:
- DE-A1- 1 771 191
- US-A- 3 738 867
- US-A- 4 356 069
- US-A- 4 439 289
- US-A- 4 944 807
- PATENT ABSTRACTS OF JAPAN vol. 1999, no. 09, 30 July 1999 (1999-07-30) & JP 11 109138 A (HITACHI CABLE LTD), 23 April 1999 (1999-04-23)

## Description

### State of the art

In a little less than half a century after its discovery, electroplating has gained a great importance and is especially used in modem industry for anti-corrosion protection, decorative purposes, manufacturing of usual utensils and items, and in the electronic technology. The process consists generally on the reduction of metallic ions from aqueous electrolytes or fused salts. This happens with the electrodeposition process, in which electrons are furnished by an external power supply, or by electroless deposition in which a reducing agent present in the solution is the electron source (no external power supply). At the end of the process a very thin bright film confers to the plated items, even if of polymeric nature, a beautiful reflecting characteristic typical of freshly cut metals.

To obtain a good adhesion of chromium on the support to be plated, such metals like nickel and copper, which have better wearing characteristics, are used as primary layers on which chromium is further deposited.

Generally, electroplating methods and the related processes involve big possibilities of pollution of waters by heavy metals, especially chromium. A heavy environmental contamination is however correlated with the rejection of plated items after use. A further problem consists on the recycling of the items with production defects.

According to this negative impact and to the projected and existing law restrictions and directives about protection of environment, efficient methods of stripping must be promoted in order to avoid water and soil contamination. Electrochemical and/or chemical stripping methods and the relative recovery of the plating metals have been well suggested in the electrodeposition art (see, for instance, Brindisi, Jr., et al., U.S. Patent N° 4,302,246; Cunningham, U.S. Patent N° 4,356,069; Colgan et al., U.S. Patent N° 6,428,625; Brooks, U.S. Patent N° 6,454,670). In U.S. Patent N° 4,356,069, Cunningham reports an aqueous solution of chromic acid, peroxide, and sulphuric acid attended for use in the reverse current stripping of metal substrates plated with Cr and/or Ni, to prepare the metal for replating. Stripping of copper or silver deposit from non-metallic non-chromium-plated substrates, such as glass, at wide pH range [0.5 - 12] is reported in US patent 3,738,867, utilising oxidising agents such as hydrogen peroxide, sodium perborate, sodium persulphate, potassium persulphate/ammonium persulphate and mixtures of the same compounds. In US Patent 4,439,289 Viglione reports the removal of magnetic coatings from computer memory discs in a sulphuric acid and glycerine solution applying an electrical potential to the electrodes in the bath, one of which being the disc itself. This process is followed by mechanical removal of remaining coatings and by chemical washings. Recently, Kazuhisa, JP-A-11.109138, reported the removal of an optic fiber coating using hydrogen peroxide together with sulphuric acid to remove the coating from the fiber and sodium hydrogencarbonate aqueous solution to clean the optical fiber. However, few information are given on the stripping of metals from coated polymeric items (Huang, U.S. Patent N° 5,019,161; Michaels et al., U.S. Patent N° 6,436,197; Hodge et al., U.S. Patent N° 2003131688 relative to mechanical-type stripping) that are, in these last decades, very abundant in all human spheres of activities.

It is noteworthy that a great attention is also required to the recovery of the plastic items in their unaltered physical-chemical characteristics. In order to make polymeric substrates re-usable for replating processes, according to the anti-pollution normative, care must be taken to avoid the decomposition of the polymers during the stripping process. Furthermore, it is of great importance the complete recovery and separation of the plating metals, in their metallic or salt form, for re-utilisation in the plating processes.

The method proposed in this invention has the main merit of combining all the upper cited characteristics, i.e., the safe and perfect conservation of the plastic basis structure after stripping, and the complete recovery and re-utilisation of nickel, copper and especially chromium, which is non-attacked, non-dissolved, and therefore ready to be re-used. The process comes out to be a rejects-free technology, with an easy industrial applicability and a very low cost.

### Summary of the invention

The invention has, as main purpose, to propose a method for the chemical stripping of plated polymeric or metallic items, the stripping process being based on the acid-hydrogen peroxide action on the deposited metals. This acid-peroxide process has been found to be very efficient for the complete recovery of nickel, copper and chromium from plated polymers, in particular of the group of acrylonitrile-butadiene-styrene (ABS and its blends with polyvinylchloride, polycarbonates, polyethylene, etc.), or from passivatable metals. A very important fact is that, at the end of the process, the polymer or the metal surface is completely clean and without any damage caused by the treatment. This fact makes the treated substrates ready for further re-deposition or use.

The preferred stripping solution used in the method of our invention is aqueous and has been made from concentrated sulphuric (technical grade, 96%) and hydrogen peroxide (technical grade, 35%). Alternatively, one can use, in place of sulphuric acid, also hydrochloric (technical grade, 35%) or other acids. The use of hydrogen peroxide has the main advantage, with respect to other oxidants, of not solubilising chromium which, otherwise, should be removed later from the solution. Other peroxides could be used but tests performed, for example, with potassium peroxodisulphate haven't given satisfactory results. The composition, in volume percentage, of the preferred aqueous stripping solution is 10% of sulphuric acid and 10% of hydrogen peroxide,

In any case the solution components are mixed first and the items to strip added later. The process is carried out at ambient temperature and is characterised by slight gas evolution and a rapid increase of temperature up to 80-90°C. The oxidation of Cu and Ni takes place under the Cr layer by diffusion of the stripping composition throughout the pores and defects present in the thin chromium coating of plated plastic and metallic substrates. The oxidation proceeds until the complete dissolution of copper and nickel under-layers. The chromium layer is liberated in fine metallic sheets at the solution surface, due to the formation of a protective chromium oxide film produced by the action of hydrogen peroxide. The chromium sheets are easily recovered by filtration.

Stirring of the solution sensibly enhances the stripping process. In order to increase further the stripping speed, the method may include a pre-treatment of the plated pieces by immersion in liquid nitrogen that favours a partial physical stripping of the plated layers. However, immersion in liquid nitrogen crumbles the polymeric structure because of the rapid decrease of temperature.

Recovery of copper and nickel present in the solution is realised by electrochemical or chemical processes.

The purpose of our invention is to provide a process in which: (i) an aqueous acid peroxide composition acts as a "safe" stripping solution of plated metals (especially nickel, copper and chromium) from polymeric or passivatable metallic structure; (*ii*) a technology of the same; *(iii)* a technology of the recovery of the substrates and the stripped metals for further use.

These three aspects together would constitute part of the main advantages of the invention, together with others that will be reported below.

### Detailed description of the invention

The proposed method of metal stripping from polymeric and metallic structures has the merit to be a very simple chemical technology, which avoids the use of chemical, and electrochemical oxidation methods where hexavalent chromium, which has a negative environmental impact, is generally formed. At the same time, the method of this invention leaves the items' structure unaltered and ready for further purposes and immediate uses, since the liberated surface does not need the pre-treatment generally required for first layer deposition, such as degreasing, polishing and acid preparation.

Even if two stripping compositions (sulphuric acid-hydrogen peroxide and hydrochloric acid-hydrogen peroxide) have been considered hereby, there are not limitations in the use of other acids or peroxides. However, the sulphuric acid-hydrogen peroxide composition has been found to be the more reliable because of its relative safety and facility of use. In particular, it should be preferred to the hydrochloric acid-hydrogen peroxide composition since: (i) chloride ions interfere in the electrolytic step of the copper recovery (see below) because of the formation of chlorine at the anode; (*ii*) nickel chloride is much more soluble than sulphate, this making more difficult the recovery of nickel; (iii) hydrochloric acid is volatile and corrosive. The simplicity and low cost (see below) of the process reported in this invention constitute, of course, a great advantage for its application at industrial scale.

The aqueous solutions are constituted of 1 volume of acid (either sulphuric, technical grade, 96% or hydrochloric, technical grade, 37%), 1 volume of hydrogen peroxide (technical grade, 35%) and 8 volumes of water, i.e. constituted of 10% by volume of the concentrated acid and 10% by volume of 35% hydrogen peroxide and 80% by volume of water.

A sequence of experiments and analysis reveals that the studied plated materials contain about 70-85% (w) of plastic material, the remaining part being constituted of copper, nickel and chromium in the ratios 63:29:8 (w), typical of the chromium plating process in the automobile industry.

The main reaction corresponds to the oxidation of copper and nickel (Me) by hydrogen peroxide, according to the equation:

Me + H₂O₂ + 2H⁺ = Me²⁺ + 2H₂O

Since the reaction implies the consumption of H⁺ and the rate of the stripping process increases with the acid concentration, it is important to maintain the latter in excess during the stripping process. For instance, at pH higher than 2 the process practically stops. Only a slight excess of hydrogen peroxide with respect to copper and nickel is needed to complete the stripping process. To maintain the passivation state of chromium it is preferable to prepare first the sulphuric acid solution, then add in it the hydrogen peroxide solution, and finally to proceed with the immersion of the plated materials.

The stripping process is highly exothermic, and the temperature of the solution rapidly increases up to 80-90°C. The produced heat can be utilised in the other steps of the technological scheme.

The slight gas evolution, which is observed during the stripping process, is due to oxygen generation deriving from catalysed disproportionation reaction of hydrogen peroxide.

Within few hours the metals are completely stripped from the surface of the polymeric structure that remains totally clean and not damaged, ready for further use. As reported above, chromium isn't dissolved and is recovered in fine sheets after filtration.

The recovery of the other metals (Cu and Ni) is realised as follows. Copper is recovered from the resulting solution by electrolysis, as nickel isn't deposited in such conditions (Patrizio Gallone, "Treatise of Electrochemical Engineering", Tamburini Editor, Milan, 1970, Chapter XIV). Nickel comes to be recovered as sulphate once saturation is attained *via* re-circulation of the electrolysed solution to the stripping reactor. Alternatively, these metals can be recovered as hydroxides by neutralisation of the solution. This aspect of the invention makes all the components of the resulting stripping solution recoverable and reusable in the electroplating technology.

Another relevant aspect of the invention is the particularly positive environmental effect of the proposed process because of the absence of rejects. In particular, formation of toxic hexavalent chromium and other chromium ions is avoided. The invention provides, therefore, the electroplating industry with a new complementary chemical technology that allows the recovery of chromium and other plating metals, such as copper and nickel, from plated articles preventing their dangerous accumulation in the environment.

The proposed process is a low-cost technology, as hydrogen peroxide is the mainly consumed reagent and the acid is partially regenerated during the electrolysis stage.

The complementary use of the existing technologies and methods of in-situ production of concentrated hydrogen peroxide permits to lower significantly the process cost.

It is noteworthy that the process presented in this invention can be also used for the analogous stripping of the plating from metal substrates objects passivatable under the realised operative conditions.

The flexibility of the proposed method and of the composition related above as preferential embodiment is effective and is illustrated in the claims.

### Brief description of the technological process

The scale-up of the invention requires a simple three-step technology, as illustrated in the principle scheme. In the first step, metals are stripped from the plated substrates, heat is recuperated, and the free substrates are taken out from the reactor for further re-plating process or reuse. In the second step, filtration of the resulting solution is performed to recuperate the chromium fine metal sheets. The filtrate is a concentrated solution of nickel and copper ions. In the last step, metallic copper is recovered by electrolysis on a Cu cathode whereas sulphuric acid is regenerated by the anodic oxidation of water. The electrolytic process affords a concentrated nickel solution, which is recirculated, to the stripping reactor up to saturation. From this saturated solution nickel is recovered as sulphate.

The cost of the stripping treatment proposed in this invention is very low and when related to the acid and hydrogen peroxide industrial prices is close to 0.10 Euro/kilogram of plated plastic.

As result of a detailed research on the possibilities and variants of the proposed method we claim:

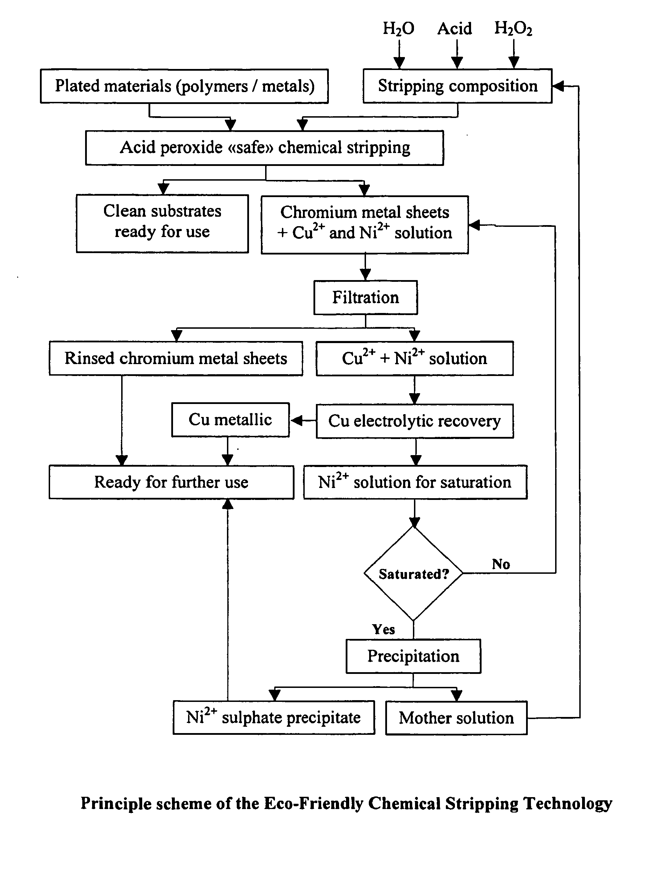

## Claims

1. A chemical method, free of environmental impact, of stripping of chromium, copper and nickel from Cr-plated polymeric substrates or Cr-plated metallic substrates passivatable under the chemical stripping conditions, said passivatable metallic substrates including aluminium. titanium, zirconium and their alloys, the process comprising:
a) immersing the plated polymeric or metallic substrates in a bath containing an aqueous acid solution of hydrogen peroxide and maintaining the acid concentration during stripping in excess. since the stripping reaction step b) practically stops at pH higher than 2;
b) dissolving the sublayers of copper and nickel by reaction with the acidic oxidising solution diffusing throughout the pores and defects of the chromium coating;
c) recovering the stripped chromium as fine chromium metallic sheets by filtration, since this metal is not dissolved due to passivation in the presence of hydrogen peroxide;
d) completely recovering the polymeric or metallic substrates in conditions that permit their use for re-plating or for other processes;
e) recovering the dissolved copper as metallic copper by electrochemical deposition of copper ions from the obtained filtrate of step c);
f) recovering the dissolved nickel as nickel salt of the stripping acid by saturation performed *via* re-circulation of the electrolysed solution in the stripping reactor followed by precipitation;
g) or alternatively to step e) and f), simultaneously recovering copper and nickel as hydroxides by neutralisation of the filtered solution.

2. A method according to claim 1, wherein the acid is sulphuric acid or hydrochloric acid.

3. A methodaccording to claim 1 or 2 wherein the acid stripling solution consists of 10 vol % of concentrated sulphuric acid, technical grade 96%, or10 vol, % of concentrated hydrochloric acid, technical grade 37%. 10 vol, % of concentrated hydrogen peroxide, technical grade 35%, and 80 vol, % of water, and wherein said acid oxidizine solution is also used for monitoring and adjusting the acid concentration of the stripping solution during the stripping process,

4. Use of the method of claim 1 to avoid contamination of environment by chrome-plating metals of plated items and articles, in particular deriving from reject items of plating industries, from automobiles and from other industries, by avoiding the dissolution of chromium and by recovering copper and nickel of the Cr-plate undercoatings.

## Patentansprüche

1. Eine nicht umweltbelastende chemische Methode, ohne Abstreifen des Chroms, Kupfers und Nickels von Cr-überzogenen polymerischen Substraten oder von Cr-überzogenen metallischen Substraten, die unter den Entplattierungbedingungen passivatable sind, sogenannte passivatable metallische Substrate einschließlich Aluminium, Titan, Zirkonium und ihre Legierungen, der Prozess bestehend aus:
a) Dem Eintauchen der überzogenen polymerischen oder metallischen Substrate in ein Bad, das eine wässrige saure Lösung des Wasserstoffperoxids enthält und die saure Konzentration während des Abstreifens übermäßig beibehält, da der abstreifende Reaktionsschritt b) bei pH höher als 2 praktisch stoppt;
b) Der Auflösung der Teilschichten des Kupfers und des Nickels durch Reaktion mit der säurehaltigen Oxidierenlösung, die durch die Poren und die defekte Chromschicht diffundiert;
c) Dem Zurückgewinnen des abgestreiften Chroms als feine Chrom-Metallblätter durch Filtration, da dieses Metall durch die Passivierung in Anwesenheit des Wasserstoffperoxids aufgelöst wird;
d) Dem vollständigen Zurückgewinnen der polymerischen oder metallischen Substrate unter Bedingungen, die ihren Gebrauch für das Neuplattieren oder für andere Prozesse ermöglichen;
e) Dem Zurückgewinnen des aufgelösten Kupfers als metallisches Kupfer durch elektrochemische Absetzung der kupfernen Ionen von dem unter Schritt c) erhaltenen Filtrat;
f) Der Wiederherstellung des aufgelösten Nickels als Nickelsalz der abstreifenden Säure durch die Sättigung, welche über Neu-Zirkulation der elektrolysierten Lösung im abstreifenden Reaktor durchgeführt wird, gefolgt von Prezipitation;
g) Oder, als Alternative zu den Schritten e) und f), dem gleichzeitigen Zurückgewinnen von Kupfer und Nickel als Hydroxide durch Neutralisierung der gefilterten Lösung.

2. Eine Methode entsprechend Anspruch 1, worin die Säure Schwefelsäure oder Salzsäure ist.

3. Eine Methode entsprechend Anspruch 1 oder 2, worin die saure abstreifende Lösung aus 10% (Vol.) der starken Schwefelsäure - des technischen Grades 96% - oder 10% (Vol.) der starken Salzsäure - des technischen Grades 37% -, 10% (Vol.) des starken Wasserstoffperoxids - des technischen Grades 35% - und 80% (Vol.) Wasser besteht und worin besagte saure Oxidierenlösung auch für die Überwachung und die Justage der sauren Konzentration der abstreifenden Lösung während des abstreifenden Prozesses angewendet wird.

4. Anwendung der Methode von Anspruch 1, um Umweltverschmutzung durch den Chromüberzug der überzogenen Einzelelemente und Artikel, insbesondere diejenigen entstehend aus zurückgewiesenen Einzelteilen der Überzugindustrien, der Automobil- und weiteren Industrien zu vermeiden, durch die Vermeidung der Auflösung des Chroms und durch das Zurückgewinnen von Kupfer und Nickel der Unterschichten der Cr-Platte.

## Revendications

1. Une méthode chimique, libre d'impact environnemental, de stripping du chrome, du cuivre et du nickel des substrats polymériques recouverts de chrome ou de substrats métalliques chromés passivables sous les conditions de stripping, lesdits substrats métalliques passivables incluant l'aluminium, le titanium, le zirconium et leurs alliages, le processus consistant en :
a) l'immersion des substrats polymériques et métalliques chromés dans un bain contenant une solution acide aqueuse de peroxyde d'hydrogène et la maintenance de la concentration de l'acide durant le stripping en excès, comme la réaction de stripping, étape b) s'arrête pratiquement à pH supérieur à 2 ;
b) la dissolution des sous-couches de cuivre et de nickel par réaction avec la solution acide oxydante diffusant à travers les pores et les défauts de la couverture de chrome ;
c) la récupération du chrome strippé sous forme de fines feuilles métalliques par filtration, vu que le métal n'est pas dissout à cause de la passivation en présence du peroxyde d'hydrogène ;
d) la complète récupération des substrats polymériques et métalliques en des conditions qui permettent leur utilisation pour un re-déposition ou pour d'autres processus ;
e) la récupération du cuivre dissout sous forme de cuivre métallique par déposition électrochimique des ions cuivre de filtrat obtenu de l'étape c) ;
f) la récupération du nickel dissout sous forme de sel de nickel de la solution de stripping par saturation *via* re-circulation de la solution électrolysée dans le réacteur de stripping suivie de précipitation ;
g) ou alternativement aux étapes e) et f), la récupération simultanée du cuivre et du nickel sous forme de hydroxydes par neutralisation de la solution filtrée.

2. Une méthode selon la revendication 1, où l'acide est l'acide sulfurique ou l'acide chlorhydrique.

3. Une méthode selon la revendication 1 ou 2, où la solution acide de stripping est constituée de 10% (vol) d'acide sulfurique concentré, degré technique 96%, ou 10% (vol) d'acide chlorhydrique concentré, degré technique 37%, 10% (vol) de peroxyde d'hydrogène concentré, degré technique 35%, et 80% (vol) d'eau, et où ladite solution acide oxydante est aussi utilisée pour suivre et ajuster la concentration acide de la solution de strippant durant le processus de stripping.

4. Utilisation de la méthode de la revendication 1 pour éviter la contamination du milieu environnant par les métaux de la déposition chromique des éléments et articles recouverts, en particulier celle dérivant des rejets des industries de déposition, des automobiles et des autres industries, en évitant la dissolution du chrome et en récupérant le cuivre et le nickel des sous-couches de déposition par chrome.
